(19) Europäisches Patentamt
European Patent Office
Office européen des brevets

(11) **EP 1 949 112 B1**

(12) **EUROPÄISCHE PATENTSCHRIFT**

(45) Veröffentlichungstag und Bekanntmachung des Hinweises auf die Patenterteilung:
**09.12.2009  Patentblatt 2009/50**

(21) Anmeldenummer: **06793355.6**

(22) Anmeldetag: **08.09.2006**

(51) Int Cl.:
*G01P 21/00* (2006.01)    *B60T 8/88* (2006.01)

(86) Internationale Anmeldenummer:
**PCT/EP2006/066171**

(87) Internationale Veröffentlichungsnummer:
**WO 2007/065740 (14.06.2007 Gazette 2007/24)**

(54) **VERFAHREN ZUR BESTIMMUNG VON LANGZEIT-OFFSET-DRIFTS VON BESCHLEUNIGUNGSSENSOREN IN KRAFTFAHRZEUGEN**

METHOD FOR THE DETERMINATION OF LONG-TERM OFFSET DRIFTS OF ACCELERATION SENSORS IN MOTOR VEHICLES

PROCÉDÉ POUR DÉTERMINER DES DÉRIVES À LONG TERME DU DÉCALAGE DE CAPTEURS D'ACCELERATION DANS DES VEHICULES AUTOMOBILES

(84) Benannte Vertragsstaaten:
**DE FR GB**

(30) Priorität: **14.11.2005  DE 102005054208**

(43) Veröffentlichungstag der Anmeldung:
**30.07.2008  Patentblatt 2008/31**

(73) Patentinhaber: **Continental Automotive GmbH 30165 Hannover (DE)**

(72) Erfinder:
- **KRETSCHMANN, Matthias 93047 Regensburg (DE)**
- **SCHLACHTER, Jens Daniel 93059 Regensburg (DE)**
- **STRATESTEFFEN, Martin Regensburg (DE)**

(56) Entgegenhaltungen:
WO-A-2005/056360    WO-A-2005/101031
JP-A- 11 190 742

EP 1 949 112 B1

**Beschreibung**

Die Erfindung betrifft ein Verfahren zur Bestimmung von Langzeit-Offset-Drifts von Beschleunigungssensoren in einem Kraftfahrzeug.

Derartige Verfahren zur Bestimmung von Langzeit-Offset-Drifts von Beschleunigungssensoren sind beispielsweise aus der WO 2005/101031, der WO 2005/056360 und der JP 11 190742 A bekannt.

Typische Offset-Drifts solcher Trägheitssensoren (Inertialsensoren) können in zwei, auf unterschiedlichen Zeitskalen agierende Beiträge unterteilt werden. Drifts, welche durch Temperaturänderungen des Sensors bzw. seiner Umgebung hervorgerufen werden, erstrecken sich über einige Minuten bis wenige Stunden. Zusätzlich kommen langfristige Drifts des Sensor-Offsets hinzu, welche im Wesentlichen auf Alterungsprozesse zurückgeführt werden können und sich über Zeiträume von mehreren Tagen über Wochen bis hin zu Monaten bemerkbar machen.

In bisherigen Erfindungen fokussiert man in der Regel auf den temperaturabhängigen Anteil des Offsets und versucht, diesen durch eine Kennlinie als Funktion der Temperatur zu ermitteln. Dazu ist aus der DE 32 12 611 A1 ein Verfahren zur Temperaturkompensation eines Sensorsignals bekannt. Gemäß diesem Verfahren wird bei Sensoren mit einer Kennlinie, deren Offset im nicht beaufschlagten Zustand einen ersten Temperaturkoeffizienten und deren Steigung einen zweiten Temperaturkoeffizienten aufweist, wobei der Quotient der Temperaturkoeffizienten näherungsweise konstant ist, der Punkt ermittelt, an welchem sich die Kennlinien bei unterschiedlicher Temperatur schneiden. Aus den Koordinaten dieses Punktes, einem Sensorsignal, der Sensortemperatur und einem der Temperaturkoeffizienten wird der Messwert, vorzugsweise mit einem Mikrocomputer bestimmt.

Aus dem Stand der Technik sind auch hardwaretechnische Ansätze bekannt, bei denen der Offset der Ausgangsspannung durch Vergleich mit einer variablen Vergleichsspannung ermittelt wird. Dazu ist aus der DE 33 34 603 A1 eine Verstärkeranordnung für einen Beschleunigungsaufnehmer bekannt. Hier wird eine Verstärkeranordnung für einen Beschleunigungsaufnehmer, insbesondere einen piezoelektrischen Beschleunigungsaufnehmer für Rückhaltesysteme in Kraftfahrzeugen vorgeschlagen, wobei zur Offsetkompensation das Ausgangssignal der Verstärkeranordnung in einem Komparator mit einer Vergleichsspannung in einem festen oder variablen Zeittakt verglichen wird. In Abhängigkeit des Ausgangssignals dieses Komparators wird im Zeittakt der Ausgangsstrom einer Stromquelle erhöht oder erniedrigt und zur Kompensation dem Verstärkereingang zugeführt. Auf diese Weise kann auch bei billigen Beschleunigungsaufnehmern der Offset-Drift über der Zeit und der Temperatur kompensiert werden.

Nachteilig an den bisherigen Lösungen ist, dass weder die Temperaturabhängigkeit noch die Spannungsänderungen ideale Variablen darstellen, die einen Offset-Drift eines Beschleunigungssensors exakt bestimmen, da diese Variablen keine Größe darstellen, die in unmittelbaren Zusammenhang mit einem Offset-Drift stehen.

Hiervon ausgehend liegt der vorliegenden Erfindung die Aufgabe zugrunde, ein Verfahren zur Bestimmung von Offset-Drifts von Beschleunigungssensoren zu schaffen, das eine exakte Ermittlung und Kompensation des Langzeit-Offset-Drifts ermöglicht.

Diese Aufgabe wird durch ein Verfahren mit den Merkmalen des Patentanspruchs 1 gelöst. Vorteilhafte Aus- und Weiterbildung, welche einzeln oder in Kombination miteinander eingesetzt werden können, sind der Gegenstand der abhängigen Ansprüche.

Das erfindungsgemäße Verfahren zeichnet sich dadurch aus, dass zunächst die Fahrzeuglängsgeschwindigkeit $V_x$ ermittelt wird. Danach erfolgt die Berechnung des fahrdynamischen Beitrags zur Referenzlängsbeschleunigung $a_{x,ref}^{dyn}$ sowie zur Referenzquerbeschleunigung $a_{y,ref}^{dyn}$ aus der Fahrzeuglängsgeschwindigkeit $V_x$ und der Gierrate $\omega_z$. Aus diesen Werten erfolgt die Ermittlung des fahrdynamischen Beitrags zur Referenzbeschleunigung $a_{\theta,sensor}^{dyn.ref}$ an der Position des zu kompensierenden Beschleunigungssensors durch Transformation der für den Fahrzeugschwerpunkt berechneten fahrdynamischen Referenzbeschleunigung ($a_{x,ref}^{dyn}$, $a_{y,ref}^{dyn}$), wobei $\theta$ die Orientierung des Sensors in der Ebene beschreibt. Schließlich wird der Offset-Drift des Sensors aus dem gemessenen Wert $a_{\theta,sensor}^{meas}$ des Sensors und dem fahrdynamischen Anteil der Referenzbeschleunigung $a_{\theta,sensor}^{dyn.ref}$ ermittelt, wobei davon ausgegangen wird, dass dieser gleich dem fahrdynamischen Anteil des Messwertes ist $a_{\theta,sensor}^{dyn.meas} = a_{\theta,sensor}^{dyn.ref}$ ist, und sich der Beitrag der Gravitation zum gemessenen Sensorsignal unter bestimmten Situationen langfristig zu Null mittelt.

Dem erfindungsgemäßen Verfahren liegt die situationsbedingte statistische Auswertung von verschiedenen Sensorsignalen zugrunde. Ist der zu kompensierende Trägheitssensor in der Fahrzeugebene in beliebiger Richtung $\theta$ angebracht, wird ein Referenzwert aus der Gierrate $\omega_z$, dem Lenkradwinkel $\delta$ und den Radgeschwindigkeiten $V_1$, $V_2$, $V_3$, $V_4$ berechnet. Hierbei ist die Richtung $\theta$ der Winkel zwischen der Fahrzeuglängsachse und der Messrichtung des Beschleunigungssensors. Eine wichtige Grundgröße für die weiteren Referenzberechnungen ist die Fahrzeuglängsgeschwindigkeit im Schwerpunkt, welche aus den Radgeschwindigkeiten, dem Lenkradwinkel δ, dem Bremslichtsignal BLS, und der Fahrtrichtung berechnet werden kann:

$$V_x = V_x(V_1, V_2, V_3, V_4, \delta, BLS, Fahrtrichtung)$$

Falls die Raddrehzahlen nicht nur den Betrag sondern auch das Vorzeichen der Geschwindigkeit angeben, ist die Zusatzinformation der aktuellen Fahrtrichtung nicht mehr nötig. Es ergibt sich in einfachster Näherung für den fahrdynamischen Beitrag zur Referenzlängsbeschleunigung im Fahrzeugschwerpunkt:

$$a_{x,ref}^{dyn} = \frac{d}{dt}V_x - l_R\omega_Z^2 \, ,$$

wobei $l_R$ der Abstand vom Fahrzeugschwerpunkt zur Hinterachse ist. Der fahrdynamische Beitrag zur Referenzquerbeschleunigung ergibt sich in einfachster Näherung im Fahrzeugschwerpunkt als:

$$a_{y,ref}^{dyn} = V_x\omega_z.$$

Es ist auch möglich, andere Methoden zur Referenzbildung zu benutzen. Es sollte jedoch darauf geachtet werden, dass diese so einfach wie möglich sind und die eingehenden Größen keine systematischen Fehler aufweisen, die zu einer Verfälschung der nachfolgenden Mittelwertmethode führen könnten.

Um einen fahrdynamischen Referenzwert für den sich in der Ebene befindenden, zu kompensierenden Beschleunigungssensor zu erhalten, sind zwei Transformationen notwendig. Zuerst muss die im Fahrzeugschwerpunkt berechnete fahrdynamische Referenzbeschleunigung ( $a_{x,ref}^{dyn}, a_{y,ref}^{dyn}$ ) an die Position des Sensors transformiert werden:

$$a_{x,sensor}^{dyn,ref} = a_{x,ref}^{dyn} - r_x\omega_z^2$$

$$a_{y,sensor}^{dyn,ref} = a_{y,ref}^{dyn} - r_y\omega_z^2$$

Dabei sind $r_x$ und $r_y$ der longitudinale, bzw. laterale Abstand der Sensorposition vom Fahrzeugschwerpunkt. Dabei wurden Beträge vernachlässigt, in denen die Ableitung der Drehraten, sowie der Rollrate und Nickrate vorkommen. Um noch auf die Messrichtung θ des Sensors zu projizieren, kann folgende Relation benutzt werden

$$a_{\theta,sensor}^{dyn,ref} = a_{x,sensor}^{dyn,ref}\cos\theta + a_{y,sensor}^{dyn,ref}\sin\theta$$

Der Messwert, der von dem zu überwachenden Sensor wiedergegeben wird, ergibt sich aus nachfolgender Gleichung

$$a_{\theta,Sensor}^{meas} = a_{\theta,Sensor}^{dyn,meas} + a_{\theta,Sensor}^{offset} + g_{II}$$

3

Dabei ist $a_{\vartheta.Sensor}^{dyn.meas}$ der fahrdynamische Anteil des Messwertes, $a_{\vartheta.sensor}^{offset}$ der zu bestimmende Offset des Sensors und $g_{||}$ die in Messrichtung liegende Komponente der Erdbeschleunigung.

Grundlegendes Prinzip des erfindungsgemäßen Verfahrens ist, dass die Erde im Mittel rund ist und sich somit die Komponente $g_{||}$ langfristig beim Fahren herausmitteln wird. Diese Methode gibt die Zeitskala für den Mittlungsprozess vor. Man kann nicht für mehrere Tage ständig bergauf fahren, ohne auch mal abwärts fahren zu müssen. Somit ist eine Mittelungskonstante von mehreren Stunden sinnvoll. Demgemäß ergibt sich der langfristige Beitrag zum Sensor-Offset gemäß nachfolgender Formel

$$a_{\vartheta.langfristig}^{offset} = \overline{a_{\vartheta.Sensor}^{meas} - a_{\vartheta.Sensor}^{dyn.ref}},$$

wobei der Mittelungsprozess durch die Linie angedeutet ist und ausgenutzt wurde, dass $\overline{g_H} = 0$ ist, und des weiteren angenommen wurde, dass $a_{\vartheta.sensor}^{dyn.meas} - a_{\vartheta.sensor}^{dyn.ref} = 0$ ist.

Um diesen Mittelungsprozess sauber ausführen zu können, werden Situationserkenner verwendet, welche hochdynamische Fahrsituationen und Fahrten bei steilen Steigungen bzw. Querneigungen sowie Fahrzeugstillstände erkennen und diese für den Mittelungsprozess ausschließen.

Vorzugsweise wird die Fahrzeuglängsgeschwindigkeit $V_x$ nach dem erfindungsgemäßen Verfahren aus den Radgeschwindigkeiten $V_1$, $V_2$, $V_3$ und $V_4$, dem Lenkradwinkel $\delta$, dem Bremslichtsignal und der Fahrtrichtung berechnet. Es ist ferner bevorzugt, dass durch die für die Bestimmung der Radgeschwindigkeit zu ermittelnde Raddrehzahl der Betrag und das Vorzeichen der Geschwindigkeit wiedergegeben wird. Demgemäß liegt dem erfindungsgemäßen Verfahren eine situationsbedingte statistische Auswertung von verschiedenen Signalen zugrunde.

Ferner ist es von Vorteil, wenn der Offset-Drift des Sensors als Mittelwert bestimmt wird, wobei eine Mittelungskonstante von mehreren Stunden gewählt wird, da sich bei dieser Zeitskala die gemessene Erdbeschleunigung bei der situationsbedingten Berechnung des Offset-Drifts zu Null mittelt.

Ferner ist es von Vorteil, wenn Situationserkenner verwendet werden, die hochdynamische Fahrsituationen und Fahrten bei steilen Steigungen bzw. Querneigungen erkennen, so dass diese außergewöhnlichen Fahrsituationen vom Mittelungsprozess ausgeschlossen werden. Außerdem müssen Stillstände vom Mittelungsprozess ausgenommen werden.

Weitere Vorteile und Ausführungen der Erfindung werden nachfolgend anhand eines Ausführungsbeispiels sowie anhand der Zeichnung erläutert.

Dabei zeigt schematisch:

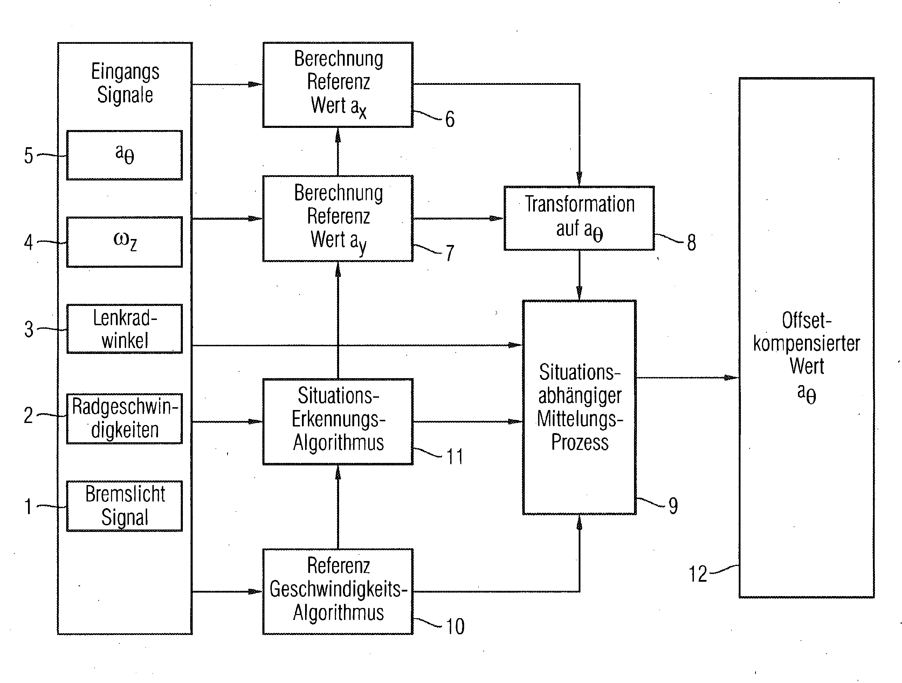

Fig. 1 ein Blockschaltbild des erfindungsgemäßen Verfahrens.

Fig.1 zeigt in einer schematischen Darstellung ein Blockschaltbild des erfindungsgemäßen Verfahrens. Der Input für das Verfahren wird durch vorzugsweise fünf Eingangssignale bereitgestellt. Die Eingangssignale ergeben sich aus dem Bremslichtsignal 1, den Radgeschwindigkeiten 2, dem Lenkradwinkel 3, der Gierrate 4 und der Beschleunigung 5. Aus diesen Signalen wird der fahrdynamische Beitrag zur Referenzlängsbeschleunigung 6 bzw. zur Referenzquerbeschleunigung 7 im Fahrzeugschwerpunkt berechnet. Diese für den Fahrzeugschwerpunkt berechneten Referenzbeschleunigungen 6, 7 werden durch Transformation 8 an die Position des Sensors gesetzt. Diese aus der Transformation 8 für die Position des Sensors ermittelten Referenzbeschleunigungen bilden eine Grundlage für den situationsabhängigen Mittelungsprozess 9.

Aus den oben aufgeführten Eingangssignalen wird des Weiteren auch eine Referenzgeschwindigkeit 10 ermittelt, die als unmittelbare Grundlage für den situationsabhängigen Mittelungsprozess 9 sowie den Referenzberechnungen 6,7 dient.

Die sich aus den Eingangssignalen 1 bis 5 ergebenden Messwerte werden zudem auch vom Situationserkenner 11 erfasst und analysiert, dessen Auswertung sowohl in die Berechnung der Referenzbeschleunigungen 6, 7 als auch in den situationsabhängigen Mittelungsprozess 9 einfließen. Aus diesem situationsabhängigen Mittelungsprozess 9 ergibt sich dann der Offset-kompensierte Wert 12 für den Beschleunigungssensor.

Die vorliegende Erfindung erlaubt es, den langfristigen Beitrag zum Offset von Beschleunigungssensoren, welche in beliebiger Richtung und beliebiger Position in der Ebene eines Kraftfahrzeugs angebracht sind, zu bestimmen. Es sind genau diese langfristigen Drifts, die sehr schlecht zu modellieren sind und daher bisher nur unzureichend durch Kennlinien abgeglichen werden konnten.

**Patentansprüche**

1.  Verfahren zur Bestimmung von Langzeit-Offset-Drifts von Beschleunigungssensoren in einem Kraftfahrzeug, wobei das Verfahren die Schritte umfasst:

    - Ermittlung der Fahrzeuglängsgeschwindigkeit $V_x$ im Fahrzeugschwerpunkt;

    - Berechnung des fahrdynamischen Beitrags zur Referenzlängsbeschleunigung $a_{x,ref}^{dyn}$ sowie zur Referenzquerbeschleunigung $a_{y,ref}^{dyn}$ aus der Fahrzeuglängsgeschwindigkeit $V_x$ und der Gierrate $\omega_z$;

    - Berechnung des fahrdynamischen Beitrags zur Referenzbeschleunigung in der Ebene durch Transformation der für den Fahrzeugschwerpunkt berechneten fahrdynamischen Referenzbeschleunigungen

    ( $a_{x,ref}^{dyn}$ , $a_{y,ref}^{dyn}$ ) an die Position ( $a_{x,sensor}^{dyn,ref}$ , $a_{y,sensor}^{dyn,ref}$ ) und auf die Orientierung $\theta$ des Sensors $a_{\theta,sensor}^{dyn,ref}$ ;

    - Ermittlung des Langzeit-Offset-Drifts des Sensors aus dem gemessenen Werten des Sensors und dem fahrdynamischen Anteil des Messwertes durch einen situationsabhängigen Mittelungsprozess.

2.  Verfahren nach Anspruch 1, **dadurch gekennzeichnet, dass** die Fahrzeuglängsgeschwindigkeit $V_x$ aus den Radgeschwindigkeiten $V_1$, $V_2$. $V_3$ und $V_4$ dem Lenkradwinkel $\delta$, dem Bremslichtsignal und der Fahrtrichtung berechnet wird.

3.  Verfahren nach Anspruch 2, **dadurch gekennzeichnet, dass** durch die für die Bestimmung der Radgeschwindigkeit zu ermittelnde Raddrehzahl der Betrag und das Vorzeichen der Geschwindigkeit wiedergegeben wird.

4.  Verfahren nach einem der vorhergehenden Ansprüche, **dadurch gekennzeichnet, dass** eine situationsbedingte statistische Auswertung von verschiedenen Sensorsignalen durchgeführt wird.

5.  Verfahren nach einem der vorhergehenden Ansprüche, **dadurch gekennzeichnet, dass** der Offset-Drift des Sensors als Mittelwert bestimmt wird.

6.  Verfahren nach Anspruch 5, **dadurch gekennzeichnet, dass** eine Mittelungszeitkonstante von mehreren Stunden gewählt wird.

7.  Verfahren nach einem der vorhergehenden Ansprüche, **dadurch gekennzeichnet, dass** die gemessene Erdbeschleunigung bei der Berechnung des Offset-Drifts beim situationsbedingten Mittelungsprozess im Mittel Null ist.

8.  Verfahren nach einem der vorhergehenden Ansprüche, **dadurch gekennzeichnet, dass** ein Situationserkenner verwendet wird.

9.  Verfahren nach Anspruch 8, **dadurch gekennzeichnet, dass** durch den Situationserkenner hochdynamische Fahrsituationen und Fahrten bei steilen Steigungen bzw. bei Querneigungen sowie Stillstände ermittelt werden.

10. Verfahren nach Anspruch 9, **dadurch gekennzeichnet, dass** hochdynamische Fahrsituationen und Fahrten bei steilen Steigungen bzw. Querneigungen sowie Stillstände vom Mittelungsprozess ausgeschlossen werden.


**Claims**

1.  Method for determining long-term offset drifts of acceleration sensors in a motor vehicle, with the method including the steps:

    - determining the longitudinal vehicle speed $V_x$ in the centre of gravity of the vehicle;

    - calculating the share of the driving dynamics in the longitudinal reference acceleration $a_{x,ref}^{dyn}$ as well as in the transverse reference acceleration $a_{y,ref}^{dyn}$ from the longitudinal vehicle speed $V_x$ and the yaw rate $\omega_z$;

    - calculating the share of the driving dynamics in the reference acceleration in the plane by means of transformation of the driving dynamics in the reference accelerations ( $a_{x,ref}^{dyn}$ , $a_{y,ref}^{dyn}$ ) calculated for the centre of gravity of the vehicle to the position ( $a_{x,sensor}^{dyn,ref}$ , $a_{y,sensor}^{dyn,ref}$ ) and orientation θ of the sensor $a_{\theta,sensor}^{dyn,ref}$ ;

- determining the long-term offset drift of the sensor from the measured values of the sensor and the proportion of the measured value in the driving dynamics by means of a situation-dependent averaging process.

2. Method according to claim 1, **characterised in that** the longitudinal vehicle speed $V_x$ is calculated from the wheel speeds $V_1$, $V_2$. $V_3$ and $V_4$, the steering wheel angle δ, the stop light signal and the direction of travel.

3. Method according to claim 2, **characterised in that** the absolute value and sign of the speed is reproduced by means of the rotational wheel speed to be ascertained for the wheel speed determination.

4. Method according to one of the preceding claims, **characterised in that** a situation-dependent statistical evaluation of different sensor signals is implemented.

5. Method according to one of the preceding claims, **characterised in that** the offset drift of the sensor is determined as an average value.

6. Method according to claim 5, **characterised in that** an averaging time constant of several hours is selected.

7. Method according to one of the preceding claims, **characterised in that** in the case of the situation-dependent averaging process the measured acceleration due to gravity is on average zero when calculating the offset drift.

8. Method according to one of the preceding claims, **characterised in that** a situation identifier is used.

9. Method according to claim 8, **characterised in that** the situation identifier determines highly dynamic driving situations and journeys in the case of steep gradients and/or transverse inclinations as well as standstills.

10. Method according to claim 9, **characterised in that** highly dynamic driving situations and journeys in the case of steep gradients and/or transverse inclinations as well as standstills are excluded from the averaging process.

**Revendications**

1. Procédé pour déterminer des dérives à long terme du décalage de capteurs d'accélération dans un véhicule automobile, ce procédé présentant les étapes suivantes :

- détermination de la vitesse longitudinale $V_x$ du véhicule au centre de gravité de celui-ci ;
- calcul à partir de la vitesse longitudinale $V_x$ du véhicule et du taux de lacet $\omega_z$, de la contribution dynamique de conduite à l'accélération longitudinale de référence $a_{x.ref}^{dyn}$ ainsi qu'à l'accélération transversale de référence $a_{y.ref}^{dyn}$ ;
- calcul de la contribution dynamique de conduite à l'accélération de référence dans le plan par transformation des accélérations de référence dynamiques de conduite ( $a_{x.ref}^{dyn}$ , $a_{y.ref}^{dyn}$ ) calculées pour le centre de gravité du véhicule en la position ( $a_{x.sensor}^{dyn.ref}$ , $a_{y.sensor}^{dyn.ref}$ ) et selon l' orientation θ du capteur $a_{0.sensor}^{dyn.ref}$ ;
- détermination de la dérive à long terme du décalage du capteur à partir des valeurs mesurées de celui-ci et de la composante dynamique de conduite de la valeur de mesure par l'intermédiaire d'un processus de moyennage dépendant de la situation.

2. Procédé selon la revendication 1, **caractérisé en ce que** la vitesse longitudinale $V_x$ du véhicule est calculée à partir des vitesses de roue $V_1$, $V_2$, $V_3$ et $V_4$, de l'angle de braquage δ du volant, du signal de feu de frein et de la direction de conduite.

3. Procédé selon la revendication 2, **caractérisé en ce que** la valeur et le signe de la vitesse sont représentés par la vitesse de rotation de roue devant être déterminée pour déduire la vitesse de roue.

4. Procédé selon l'une des revendications précédentes, **caractérisé en ce qu'**il est procédé à une évaluation statistique dépendant de la situation concernant plusieurs signaux de capteur.

5. Procédé selon l'une des revendications précédentes, **caractérisé en ce que** la dérive du décalage du capteur est déterminée en tant que valeur moyenne.

6. Procédé selon la revendication 5, **caractérisé en ce que** l'on choisit une constante de temps de moyennage de plusieurs heures.

7. Procédé selon l'une des revendications précédentes, **caractérisé en ce que** l'accélération terrestre mesurée présente une moyenne nulle lors du calcul de la dérive de décalage lors du processus de moyennage dépendant de la situation.

8. Procédé selon l'une des revendications précédentes, **caractérisé en ce qu'**on utilise un dispositif de reconnaissance de situations.

9. Procédé selon la revendication 8, **caractérisé en ce que** le dispositif de reconnaissance de situations détermine des situations de conduite à haute dynamique et des conduites avec montée rapide ou avec inclinaison latérale, ainsi que les arrêts.

10. Procédé selon la revendication 9, **caractérisé en ce que** des situations de conduite à haute dynamique et des conduites avec montée rapide ou avec inclinaison latérale, ainsi que les arrêts sont exclus du processus de moyennage.

Eingangs Signale

5 — $a_\theta$

4 — $\omega_z$

3 — Lenkrad-winkel

2 — Radgeschwin-digkeiten

1 — Bremslicht Signal

Berechnung Referenz Wert $a_x$ — 6

Berechnung Referenz Wert $a_y$ — 7

Transformation auf $a_\theta$ — 8

Situations-Erkennungs-Algorithmus — 11

Referenz Geschwindigkeits-Algorithmus — 10

Situations-abhängiger Mittelungs-Prozess — 9

Offset-kompensierter Wert $a_\theta$

12

8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2005101031 A
- WO 2005056360 A
- JP 11190742 A
- DE 3212611 A1
- DE 3334603 A1